# EUROPÄISCHE PATENTANMELDUNG

(11) **EP 1 197 325 A2**
(43) Veröffentlichungstag der Anmeldung: **17.04.2002**
(21) Anmeldenummer: 01123167.7
(22) Anmeldetag: 27.09.2001
(51) Int. Cl.: B32B 17/10, B44C 1/00, C03C 27/12

(54) **Verfahren zur Herstellung von Verbundglas mit einer Mattierung**

(30) Priorität: 11.10.2000 DE 10050345
(71) Anmelder: Galac, Andreas Peter, A-4052 Ansfelden (AT); Galac, Ladislaus, A-4052 Ansfelden (AT)
(72) Erfinder: Galac, Andreas Peter, A-4052 Ansfelden (AT); Galac, Ladislaus, A-4052 Ansfelden (AT)
(74) Vertreter: Haft, von Puttkamer, Berngruber, Czybulka

(57) **Zusammenfassung**

Zur Herstellung von Verbundglas, einschließlich Verbundsicherheitsglas, mit einer Mattierung wird auf der Innenseite einer Glasscheibe des Verbundglases ein pigmenthaltiger Acrylharzlack aufgetragen, der aus 10 bis 40 Gew.-% Acrylharz, 0,1 bis 10 Gew.-% Pigment und Lösungsmittel als Rest besteht. Der Lack wird bei Raumtemperatur getrocknet, worauf die lackierte Glasscheibe zum Verbundglas laminiert wird.

## Beschreibung

Die Erfindung bezieht sich auf ein Verfahren zur Herstellung von Verbundglas mit einer Mattierung nach dem Oberbegriff des Anspruchs 1.

Sandgestrahlte Gläser sind effektvoll und daher weit verbreitet. Durch die rauhe Oberfläche sind sie jedoch schwer zu reinigen. Auch geht der optische Effekt durch Feuchtigkeit und/oder Schmutz, insbesondere Fett, verloren, sodass sie fleckig und damit unansehnlich werden können.

Verbundglas besteht aus Glasscheiben, die durch eine elastische Zwischenschicht verbunden sind. Falls ein derartiges Verbundglas bestimmte Sicherheitskriterien erfüllt, wird es auch als Verbundsicherheitsglas bezeichnet. Die elastische Zwischenschicht kann ein Gießharz oder eine Folie sein, die mit einem Klebstoff, insbesondere Polyvinylbutyral, versehen ist. Um bei Verbundglas einen Sandstrahleffekt zu erzielen, ist es bekannt, die elastische Zwischenschicht entsprechend einzufärben. Damit ist jedoch nur ein ganzflächiger Effekt erzielbar.

Um Verbundglas mit einem Muster mit einem optischen Sandstrahleffekt zu versehen, ist es bekannt, einen Epoxydharzlack aufzutragen, der gegenüber dem Gießharz und dem Klebstoff der Folie beständig ist. Der Epoxydharzlack wird beispielsweise durch Siebdruck auf die Innenseite einer der Glasscheiben aufgetragen und dann eingebrannt. Da dazu ein Lackierraum, Einbrennöfen und erhebliche Produktionsflächen benötigt werden, ist das Verfahren nur industriell durchführbar. In kleineren, insbesondere Handwerksbetrieben lassen sich damit keine individuell gestalteten Verbundgläser herstellen.

Aus EP 0 665 783 B1 ist es bereits bekannt, auf die Polyvinylbutyralfolie durch Siebdruck mit einer Farbe auf Epoxidharzbasis ein Muster aufzubringen und das Verbundglas nach dem Zusammenbau in einem Autoklaven einem hohen Druck und einer hohen Temperatur auszusetzen. Auch dieses Verfahren kann damit nur wirtschaftlich in größeren Serien und in entsprechend ausgerüsteten Betrieben durchgeführt werden.

Aus DE 40 20 090 A1 geht eine Hinterglaslackierung hervor, bei der auf die noch flüssige Farbe zur Erhöhung der Kratzfestigkeit eine sich mit der Farbe verbindende Auflage, z.B. ein Netz, über die gesamte Fläche aufgezogen wird.

Nach DE 23 14 622 A wird zur Änderung der Lichtdurchlässigkeit einer Mehrschichtplatte zwischen den beiden Glasplatten ein Schicht aus einem Granulat aus transparentem Material, beispielsweise Polyacrylat, und einem Klebstoff, wie Polyvinylbutyral, aufgetragen.

Aufgabe der Erfindung ist es, ein Verfahren bereitzustellen, mit dem Verbundgläser auch einzeln mit geringem Aufwand mit einer Mattierung versehen werden können.

Dies wird mit dem in Anspruch 1 gekennzeichneten Verfahren erreicht. In den Ansprüchen 2 bis 8 sind bevorzugte Ausführungsformen des erfindungsgemäßen Verfahrens angegeben. Durch die Markierung wird die sonst transparente Verbundglasscheibe opak.

Nach der Erfindung wird zur Erzielung einer Mattierung eines Verbundglases auf der Innenseite wenigstens einer Glasscheibe, aus der das Verbundglas herstellt wird, ein pigmenthaltiger Lack auf Acrylharzbasis aufgetragen. Der Acrylharzlack wird vorzugsweise an der Luft bei Umgebungstemperatur getrocknet, worauf die so behandelte Glasscheibe mit der oder den anderen Glasscheiben des Verbundglases durch eine elastische Zwischenschicht verbunden wird, derart, dass die elastische Zwischenschicht mit dem Lack in Berührung steht. Die elastische Zwischenschicht kann durch ein übliches Verbundglasgießharz, beispielsweise ein Polyester-Gießharz, vorzugsweise aus ungesättigtem Polyester, oder durch eine Klebefolie mit Polyvinylbutyral als Klebstoff gebildet sein.

Damit kann nach der Erfindung auch ein Handwerks- oder sonstiger Kleinbetrieb ein Verbundglas mit einem individuell gestalteten optischen Sandstrahleffekt ohne zusätzliche Einrichtungen schnell und einfach herstellen.

Das Acrylharz bildet das Bindemittel des erfindungsgemäßen Lacks, sorgt also für die Verankerung der Pigmente an der Glasscheibe. Es ist gegenüber dem Gießharz bzw. dem Folienklebstoff der elastischen Zwischenschicht des Verbundglases derart beständig, dass der optische Sandstrahleffekt dauerhaft bestehen bleibt.

Als Acrylharz sind die bekannten Acrylharzbindemittel einsetzbar. Als besonders geeignet hat sich mit synthetischen Fettsäuren modifiziertes Acrylcopolymer herausgestellt. Vorzugsweise wird beispielsweise in Butylacetat angelöstes Acrylharz verwendet.

Als Lösungsmittel werden vorzugsweise leicht flüchtige organische Lösungsmittel verwendet, die sich nach dem Auftragen des Lacks bei Umgebungstemperatur verflüchtigten, insbesondere Butylacetat, Ethylacetat, Aceton oder Gemische dieser Lösungsmittel.

Das Trocknen erfolgt vorzugsweise bei Umgebungstemperatur, also beispielsweise bei Raumtemperatur, d.h. 15-30°C oder im Freien ggf. in der Sonne bei höherer Temperatur. Auch kann die so lackierte Glasscheibe erwärmt werden, um den Trocknungsvorgang zu beschleunigen. Eine Temperatur von mehr als 80° wird in der Praxis jedoch zum Trocknen nicht angewendet. Die Trocknungszeit kann beispielsweise 10 Minuten bis zwei Stunden je nach Temperatur, Lösungsmittel und aufgebrachter Lackmenge betragen. Unmittelbar nach dem Trocknen des Lacks kann die so an ihrer Innenseite lackierte Glasscheibe durch die elastische Zwischenschicht mit der anderen Glasscheibe laminiert werden, und zwar vorzugsweise bei Umgebungstemperatur.

Die Mattierung wird durch die Pigmente in dem Lack bewirkt. Als Pigmente können Weiß-, Bunt-, Schwarz- oder Metalleffekt-Pigmente eingesetzt werden. Statt einer farblosen elastischen Zwischenschicht kann auch eine eingefärbte Zwischenschicht verwendet werden. Beispielsweise wird der Metalleffekt von Metalleffekt-Pigmenten durch eine dunkel- oder schwarz eingefärbte elastische Verbundglaszwischenschicht hervorgehoben.

Für einen optischen Sandstrahleffekt als Mattierung werden bevorzugt Weißpigmente verwendet, und zwar insbesondere Titandioxid. Die Teilchengröße des Titandioxids kann beispielsweise zwischen 0,1 und 1 µm betragen. Der Titandioxid-haltige Lack kann mit synthetischer amorpher Kieselsäure abmattiert sein. Vorzugsweise wird mit Aluminiumhydroxid oberflächenbehandeltes Titandioxid verwendet.

Zur Herstellung des Lacks werden das Acrylharz und das oder die Pigmente in dem Lösungsmittel dispergiert, bis eine homogene Dispersion vorliegt. Das Dispergieren kann beispielsweise durch Verreiben des Acrylharzes und des bzw. der Pigmente mit dem Lösungsmittel in einer Mühle erfolgen.

Der Lack weist folgende Zusammensetzung auf:
- 10 bis 40, vorzugsweise 15 bis 30 Gew.-% Acrylharz
- 0,1 bis 10, vorzugsweise 0,1 bis 3 Gew.-% Pigment
- Rest Lösungsmittel

Beispielsweise kann der Lack die folgende Zusammensetzung aufweisen:
- 15 bis 30 Gew.-% Acrylharz
- 0,1 bis 3 Gew.-% Titandioxid
- Rest Lösungsmittel

Das Lösungsmittel kann aus einem Gemisch aus Butylacetat, Ethylacetat und Aceton bestehen, z. B. 40 bis 70 Gew.-Teile Butylacetat, 20 bis 50 Gew.-Teile Ethylacetat und Aceton als Rest.

Zudem kann der Lack weitere Zusätze enthalten, insbesondere Additive und Mattierungsmittel.

Der Flüssiglack bildet einen Ein-Komponentenlack. Er kann auf die Glasscheibe auf beliebige Weise aufgetragen werden, z.B. durch Streichen, Rollen, Drucken, Tauchen oder Spritzen. Das Spritzen kann beispielsweise mit einer Spritzpistole erfolgen.

Bevorzugt wird der Lack jedoch durch Sprühdosenlackierung aufgetragen. Er kann damit in Handwerks- und Kleinbetrieben schnell und auf einfache Weise auf die Innenseite der Glasscheibe aufgebracht werden, aus der das Verbundglas hergestellt wird, um einen optischen Sandstrahleffekt zu erzielen. Als Treibmittel in der Sprühdose können Propan, Butan, Dimethylether oder deren Gemische verwendet werden. Treibmittel auf der Basis von Dimethylether werden bevorzugt.

Die Menge des Lacks, der auf die eine der beiden der elastischen Zwischensicht benachbarten Glasscheiben aufgetragen wird, hängt von der gewünschten Stärke der Mattierung bzw. des optischen Sandstrahleffekts ab. Ggf. kann der Lack auch mehrmals aufgetragen werden. Auch ist es möglich, nicht nur die eine Glasscheibe sondern beide Glasscheiben, die durch die elastische Zwischenschicht verbunden werden, erfindungsgemäß mit einer Mattierung zu versehen.

Vorzugsweise wird das erfindungsgemäße Verfahren zur Herstellung von Verbundglas eingesetzt, das mit einem individuell gestalteten Muster mattiert ist, beispielsweise einer Beschriftung, einem Design oder dergleichen. Dazu wird die Innenseite der betreffenden Glasscheibe außerhalb des aufzutragenden Musters, also beispielsweise mit einer Schablone abgedeckt, worauf der Lack auf den unabgedeckten Bereich der Glasscheibe aufgetragen, vorzugsweise aufgesprüht wird. Nach Entfernen der Abdeckung bzw. Schablone und Trocknen des Lacks wird die Glasscheibe zum Verbundglas laminiert. Als Schablone kann jede rückstandsfreie abziehbare Klebefolie verwendet werden. Das individuell gestaltete Verbundglas mit einem solchen Muster kann beispielsweise als Glastür, im Badebereich, z.B. als Duschabdeckung, als Spiegel oder dergleichen eingesetzt werden.

## Patentansprüche

1. Verfahren zur Herstellung von Verbundglas aus Glasscheiben, die durch eine elastische Zwischenschicht miteinander verbunden sind, mit einer Mattierung, bei dem ein pigmenthaltiger Lack auf der Innenseite wenigstens einer Glasscheibe aufgetragen wird, worauf die lackierte Glasscheibe nach dem Trocknen des Lacks zum Verbundglas laminiert wird, **dadurch gekennzeichnet, dass** ein bei Umgebungstermperatur trocknender Lack verwendet wird, der aus
10 bis 40 Gew.-% Acrylharz
0,1 bis 10 Gew.-% Pigment und
Lösungsmittel als Rest besteht.

2. Verfahren nach Anspruch 1, **dadurch gekennzeichnet, dass** zur Mattierung in Form eines optischen Sandstrahleffektes als Pigment Titandioxid verwendet wird.

3. Verfahren nach Anspruch 2, **dadurch gekennzeichnet, dass** die mittlere Teilchengröße des Titandioxids 0,1 bis 1 µm beträgt.

4. Verfahren nach einem der vorstehenden Ansprüche, **dadurch gekennzeichnet, dass** zum Abmattieren amorphe Kieselsäure verwendet wird.

5. Verfahren nach einem der vorstehenden Ansprüche, **dadurch gekennzeichnet, dass** als Lösungsmittel des Lacks Butylacetat, Ethylacetat, Aceton oder ein Gemisch dieser Lösungsmittel verwendet wird.

6. Verfahren nach einem der vorstehenden Ansprüche, **dadurch gekennzeichnet, dass** der Lack durch Sprühdosenlackierung auf die Innenseite der Glasscheibe, aus der das Verbundglas hergestellt wird, aufgetragen wird.

7. Verfahren nach Anspruch 6, **dadurch gekennzeichnet, dass** als Treibmittel in der Sprühdose Dimethylether verwendet wird.

8. Verfahren nach einem der vorstehenden Ansprüche, **dadurch gekennzeichnet, dass** zur Herstellung von Verbundglas mit einem mattierten Muster die Innenseite der Glasscheibe, aus der das Verbundglas hergestellt wird, außerhalb des Bereichs des Musters abgedeckt und dann besprüht wird.
